# EUROPÄISCHE PATENTSCHRIFT

(11) **EP 3 105 608 B1**
(45) Veröffentlichungstag und Bekanntmachung des Hinweises auf die Patenterteilung: **06.05.2020**
(21) Anmeldenummer: 15713629.2
(22) Anmeldetag: 14.01.2015
(51) Int. Cl.: G01S 3/808, G08G 3/00

(54) **ÜBERWACHUNGSSYSTEM ZUM ÜBERWACHEN SOWIE VERFAHREN ZUM VERIFIZIEREN EINES WASSERFAHRZEUGS ODER MEHRERER WASSERFAHRZEUGE**
MONITORING SYSTEM FOR MONITORING, AND METHOD FOR VERIFYING, A WATERCRAFT OR A PLURALITY OF WATERCRAFT
SYSTÈME DE SURVEILLANCE POUR LA SURVEILLANCE AINSI QUE PROCÉDÉ DE VÉRIFICATION D'UN NAVIRE OU DE PLUSIEURS NAVIRES

(30) Priorität: 14.02.2014 DE 102014101902
(43) Veröffentlichungstag der Anmeldung: 21.12.2016
(73) Patentinhaber: ATLAS ELEKTRONIK GmbH, 28309 Bremen (DE)
(72) Erfinder: DORSCH, Wolfgang, 26789 Leer (DE); MÜLLER, Rolf, 28357 Bremen (DE); SCHMIDT, Heiko, 27299 Langwedel (DE)
(74) Vertreter: thyssenkrupp Intellectual Property GmbH
(86) Internationale Anmeldenummer: PCT/DE2015/100020
(87) Internationale Veröffentlichungsnummer: WO 2015/120838

(56) Entgegenhaltungen:
- WO-A1-2014/023293
- WO-A2-2011/138744
- US-A- 5 995 445
- US-A1- 2006 244 826
- US-A1- 2008 260 467
- US-B1- 6 850 173

## Beschreibung

Die Erfindung betrifft ein Überwachungssystem zum Überwachen eines Wasserfahrzeugs oder mehrerer Wasserfahrzeuge, mit einer Identifikationsvorrichtung und einem ersten Hydrophon, welches derart eingerichtet ist, dass von einem der Wasserfahrzeuge ausgesandte Schallsignale als Unterwasserschallinformation bestimmt werden, wobei die Identifikationsvorrichtung einen ersten Speicher für die Unterwasserschallinformation und einen zweiten Speicher für eine Wasserfahrzeuginformation aufweist, wobei der erste Speicher und der zweite Speicher miteinander verknüpft sind, und ein Verfahren zum Verifizieren einer transmittierten Wasserfahrzeuginformation eines Wasserfahrzeugs sowie eine Vorrichtung, welche das Verfahren ausführt.

Insbesondere große Frachtschiffe senden ein Identifikationssignal aus, welches das Schiff und dessen Position und Geschwindigkeit beispielsweise an eine Küstenüberwachung weiterleitet. Derartige Informationsysteme werden beispielsweise als AIS (Automatic Identification System) oder UAIS (Universal Automatic Identification System) bezeichnet und basieren zumeist auf Funk. Durch dieses ausgesandte Signal wissen auch andere Schiffe in der Umgebung, welche Schiffe sich auf welchem Kurs befinden.

Problematisch ist, dass derartige Systeme leicht gefälscht werden können. Insbesondere im Falle von Piraterie, können derartige Funksignale gänzlich ausgeschaltet werden oder es wird eine Schiffssignatur zu einem gänzlich anderen Schiff ausgesandt, so dass sich das Auffinden des gekaperten Schiffes schwierig gestaltet.

Zusätzlich und ergänzend wird der Schiffsverkehr über Radarsysteme überwacht. Diese Radarsysteme basieren auf zurückgeworfene Funkwellen, aus denen sich Schiffsgröße und Entfernung bestimmen lassen. Durch das zeitliche Verfolgen kann dabei auch der Kurs eines Schiffes abgefragt werden.

Problematisch bei einem Radarüberwachungssystem ist, dass eine sogenannte "Line of Sight" bestehen muss, da im Allgemeinen die Funkwellen nicht über die Erdkrümmung hinweg zurückreflektiert werden. Ein Verfolgen eines Schiffes über den Horizont hinaus (over the horizon) ist mithin nicht möglich. Sowohl das AI-System als auch Radarsysteme werden parallel oder ergänzend zueinander verwendet.

Die WO 2011/138744 A2 offenbart eine Datenbestätigungsvorrichtung eines automatischen Identifikationssystems (AIS), bei dem mehrere Beobachter an Land, auf dem Meer und in der Luft um das zu überwachende Schiff herum angeordnet sind und ein direkter Abgleich der AIS-Daten des Schiffes mit den Beobachtungsdaten erfolgt.

In der WO 2014/023293 A1 wird ein Verfahren zum Klassifizieren eines Wasserfahrzeuges anhand von abgestrahlten oder gesendeten Schallwellen des Wasserfahrzeuges beschrieben, wobei aus den Empfangssignalen nach einer Analyse von Frequenzliniensätze charakteristischer Fahrzeugparameter ermittelt werden, welche anschließend mit Parameterwerten einer Datenbank verglichen werden.

In der US 2006/0244826 A1 sind ein Überwachungssystem und eine Methode zum Überwachen von Schiffen in Wasserwegen und Häfen unter Verwendung von Kameras zur Aufnahme von Bildern des zu überwachenden Schiffes beschrieben.

Die US 2008/0260467 A1 beschreibt ein Hafeninspektionssystem zur Vermeidung von Terrorangriffen, wobei dieses zwei oder mehrere halbgetauchte schwimmende Plattformen außerhalb des Hafens sowie eine Vielzahl von Überwasser- und Unterwassersensoren aufweist.

Die US 5,995,445 A) offenbart ein System zum Auffinden von Schallwandlerelementen ausgesetzt von einer zufällig verteilten, nicht angebundenen Anordnung einer Vielzahl von Sonarbojen.

Aufgabe der Erfindung ist es den Stand der Technik zu verbessern.

Gelöst wird die Aufgabe durch ein Überwachungssystem zum Überwachen eines Wasserfahrzeugs oder mehrerer Wasserfahrzeuge mit einer Identifikationsvorrichtung und einem ersten Hydrophon, welches derart eingerichtet ist, dass von einem der Wasserfahrzeuge ausgesandte Schallsignale als Unterwasserschallinformation bestimmt werden, wobei die Identifikationsvorrichtung einen ersten Speicher für die Unterwasserschallinformation und einen zweiten Speicher für eine gemessene und/oder abgelegte Wasserfahrzeuginformation aufweist, wobei der erste Speicher und der zweite Speicher miteinander verknüpft sind und das erste Hydrophon ortsfest angeordnet ist.

Dadurch kann ein Überwachungssystem bereitgestellt werden, welches Schiffsidentifikation und Kursverfolgung auch over the horizon, sprich über den Horizont hinweg, ermöglicht. Zudem können Schiffe identifiziert und wiedererkannt werden. Auch defekten AI- oder UAI-Systeme können durch ein derartiges Überwachungssystem teilredundant kompensiert und ein sicherer Schiffsverkehr gewährleistet werden.

### Folgendes Begriffliche sei erläutert:

"Wasserfahrzeuge" sind sämtliche auf und/oder unter Wasser fortbewegende Fahrzeuge, welche eine charakteristische Unterwasserschallsignatur, beispielsweise aufgrund der Schiffsrotoren, aussendet. Auch Plattformen oder Bojen sind mit umfasst.

Die "Identifikationsvorrichtung" ermöglicht zum einen ein Bestimmen der Unterwasserschallsignatur und zum anderen ein Abspeichern dieser Signatur sowie das Zuordnen einer Unterwasserschallsignatur zu genau einem Wasserfahrzeug. Somit umfasst die Identifikationsvorrichtung zumindest einen Rechner mit einem Datenbanksystem. Dabei kann das Datenbanksystem sehr rudimentär aufgebaut sein oder eine relationale Datenbank umfassen.

Der Erfindung liegt die Erkenntnis zu Grunde, dass jedes Wasserfahrzeug eine ganz eigene signifikante Unterwasserschallsignatur aussendet. Somit ist diese Unterwasserschallsignatur eine Art Fingerprint, welcher es ermöglicht, das Schiff exakt zu identifizieren. Selbst Schiffe gleicher Bauart können unterschieden werden, da geringste Abweichungen im Antriebsstrang zu einer anderen Unterwasserschallsignatur führen.

Ein "Hydrophon" wird teilweise auch als passives Sonar bezeichnet. Da vorliegende Hydrophone ortsfest fixiert sind, können diese auch einen breiten Frequenzbereich abhören. Insbesondere können derartige Hydrophone mehrere 100 Meter Ausdehnung aufweisen, so dass auch tiefe Frequenzen detektierbar sind. Insbesondere diese tiefen Frequenzen können über den Horizont hinweg detektiert werden, so dass das Unterwasserschallsignal eines Wasserfahrzeugs auch über diesen Bereich hinaus verfolgbar ist. Insbesondere können die Hydrophone in einer derartigen Wasserschicht angeordnet sein, welche den Unterwasserschall besonders effektiv, beispielsweise aufgrund ihrer Salinität, leitet.

Die Identifikationsvorrichtung umfasst insbesondere einen Rechner mit einem "ersten Speicher" und einem "zweiten Speicher". In dem ersten Speicher ist insbesondere die zuvor beschriebene Unterwasserschallsignatur zu einem Schiff abgelegt. In dem zweiten Speicher können weitere Schiffsinformationen abgelegt sein. Insbesondere sind der Schiffstyp und die Schiffsbezeichnung hinterlegt. Zusätzlich können weitere Informationen wie Ladung, Flaggung, und/oder Kurs mit umfasst sein. Diese Schiffsinformationen werden insbesondere beim Erstkontakt über das AI-System automatisch gefüllt.

Durch die eindeutige Zuordnung des ersten Speichers und des zweiten Speichers sind Schiffsinformationen und die Unterwasserschallsignatur (vorliegend auch Unterwasserschallinformation genannt) miteinander verknüpft.

Somit kann, sobald die Unterwasserschallinformation erneut empfangen wird, das Schiff eindeutig identifiziert werden. Auch kann ein Wasserfahrzeug nach erneutem Eintreten in das Überwachungsgebiet erkannt und verfolgt werden.

Vorliegend ist wesentlich, dass das Hydrophon fest mit dem Erdboden verankert ist. Eine derartige Verankerung, im Folgenden wird diese Art der Verankerung auch "stationär" und "ortsfest" genannt, kann direkt am Meeresgrund oder indirekt beispielsweise entlang einer Hafenmauer erfolgen.

Um den genauen Ort und/oder einen Kurs eines Wasserfahrzeug nachzuvollziehen, kann ein zweites Hydrophon vorgesehen sein, welches in einem Mikrofonabstand zum ersten Hydrophon stationär und ortsfest angeordnet ist. Auch hier ist gewährleistet, dass das Hydrophon im Allgemeinen jederzeit vom Wasser bedeckt ist und so mit dem Erdboden verankert ist, dass das Hydrophon im Wesentlichen keine Bewegungen vollzieht. Weiterhin kann dieses Hydrophon sämtliche gleiche Eigenschaften wie das erste Hydrophon aufweisen.

In einer weiteren Ausführungsform ist ein drittes und/oder ist ein viertes Hydrophon oder sind weitere Hydrophone vorgesehen, welche jeweils untereinander oder zum ersten Hydrophon oder zum zweiten Hydrophon in einem Hydrophonabstand stationär und ortsfest angeordnet sind.

Somit kann der Ort oder der Kurs besser exakter bestimmt werden. Mithin erhöht sich die Auflösung des Überwachungssystems. Sämtliche Hydrophone können analog zum ersten Hydrophon ausgestaltet sein oder weitere Eigenschaften aufweisen.

Um gegebenenfalls einzelne Küstenabschnitte besser zu überwachen, können die Hydrophonabstände der einzelnen Hydrophone unterschiedlich ausgestaltet sein. Zudem können beispielsweise in einem Kanal die Hydrophone auch gegenüberliegen angeordnet sein.

Um ein großes Seegebiet optimal abdecken zu können, kann ein Wert des Hydrophonabstandes zwischen 100m und 100km, insbesondere zwischen 500m und 50km oder zwischen 1km und 20km, liegen.

In einer weiteren Ausgestaltung weist das Überwachungssystem eine Klassifikationsvorrichtung auf, welche Wasserfahrzeuginformationen eines der Wasserfahrzeuge ermittelt.

Eine derartige Klassifikationsvorrichtung kann beispielsweise ein AIS oder ein UAIS sein.

Grundsätzlich gilt, dass das Klassifikationssystem unabhängig von der Unterwasserschallinformation eine Schiffsinformation erhält. Insbesondere durch den Abgleich dieser unabhängigen Informationen kann beispielweise eine Gefahrenlage erkannt werden.

Insbesondere erkennt die Klassifikationsvorrichtung autonom von dem Wasserfahrzeug aus gesandte Informationen.

Um Alternativen bei der Identifikation der Wasserfahrzeuge bereit stellen zu können, kann die Klassifikationsvorrichtung derart eingerichtet sein, dass optische Informationen und/oder Funkinformationen (z.B. Radar) zum Ermitteln der Wasserfahrzeuginformation verwendet werden.

Insbesondere bei den optischen Informationen können Kameras mit nachgelagerten automatischen Erkennungssystemen, die analog zu einem OCR-System Schiffe erkennen können, eingesetzt werden. Auch kann beispielsweise durch eine Kamera ein auf dem Schiff aufgebrachter Schriftzug mittels OCR erkannt werden, so dass auch diesbezüglich eine Schiffsinformation vorliegt.

Um zusätzlich eine Schiffsidentifikation zu gewährleisten oder alternativ eine Schiffsidentifikation vorzunehmen, kann die Klassifikationsvorrichtung oder können Teile der Klassifikationsvorrichtung in einem unbemannten Fahrzeug, insbesondere einer Drohne, in einem Satellit, in einem autonomen Wasserfahrzeug oder in einem autonomen Unterwasserfahrzeug angeordnet sein.

Insbesondere wenn Abweichungen zwischen der AIS-Fahrzeuginformation und der mit der Unterwasserschallinformation hinterlegten Schiffsinformation vorliegen, kann ein separates Verifizieren durch ein derartiges unbemanntes Fahrzeug erfolgen.

Auch kann an dem unbemannten Fahrzeug unabhängig von einem etwaigen AIS, welches nicht unbedingt bei jedem Wasserfahrzeug vorgesehen ist, eine Identifikation vorgenommen werden, welche insbesondere in diesem Fall ein Wasserfahrzeuginformation in dem zweiten Speicher der Identifikationsvorrichtung hinterlegt.

Zudem wird die Aufgabe gelöst durch ein Verfahren zum Verifizieren einer transmittierten Wasserfahrzeuginformation eines Wasserfahrzeugs, insbesondere eines AIS-Signals, wobei das Verfahren insbesondere mit einem zuvor beschriebenen Überwachungssystem durchgeführt wird und folgende Schritte aufweist:

Ermitteln der transmittierten Wasserfahrzeuginformation des Wasserfahrzeugs und Identifizieren des Wasserfahrzeugs,
- Ermitteln einer Mess-Unterwasserschallinformation des Wasserfahrzeugs,
- Vergleichen der Mess-Unterwasserschallinformation mit einer Referenz-Unterwasserschallinformation des identifizierten Wasserfahrzeug und
- Anzeigen einer Abweichinformation, falls die Mess-Unterwasserschallinformation von der Referenz-Unterwasserschallinformation abweicht.

Insbesondere kann somit eine gefälschte AIS-Information erkannt werden. Auch können so gekaperte Schiffe, welche eine gefälschte AIS-Information aussenden, erkannt und verfolgt werden. Somit kann vorliegend ein effektives Werkzeug zur Terrorbekämpfung bereitgestellt werden.

### Folgendes Begriffliche sei erläutert:

Eine "transmittierte Wasserfahrzeuginformation" umfasst sämtliche ausgesandte aktive und passive Wasserfahrzeuginformation, welche nicht unterwasserschallbasiert sind. Insbesondere sind Informationen der AI-Systeme und UAI-Systeme hiervon umfasst.

Zuvor getroffene Definitionen werden hier analog übernommen.

Ein Ermitteln der transmittierten Wasserfahrzeuginformation ist beispielsweise das Auswerten eines AI-Systems und somit das Bestimmten der ausgesandten Informationen. Anhand dieser Informationen wird das spezielle Wasserfahrzeug identifiziert.

Eine Mess-Unterwasserschallinformation ist insbesondere eine Schallinformation, welche mit fest verorteten und insbesondere verankerten Hydrophonen bestimmt wird. Auch hier liegt der Kerngedanke der Erfindung darin, dass jedes Schiff anhand seiner Unterwasserschallinformation (Unterwasserschallsignatur) erkennbar ist.

Eine Referenz-Unterwasserschallinformation ist eine Unterwasserschallinformation, welche für das identifizierte Wasserfahrzeug zuvor in den Speichern hinterlegt wurde.

Ein Vergleich der Mess-Unterwasserschallinformation und der Referenz-Unterwasserschallinformation erfolgt beispielsweise durch Autokorrelation, so dass gewisse Änderungen in einer Unterwasserschallsignatur unschädlich sind. Fällt der bestimmte Autokorrelationswert unterhalb eines Grenzwertes, so wird der Vergleich als nicht bestanden klassifiziert und es liegt eine Abweichinformation vor. Diese "Abweichinformation" kann beispielsweise in Form eines Alarms auf einem Bildschirm dargestellt werden.

Somit können Hafenbehörden oder Küstenüberwachungsbehörden entsprechende Maßnahmen ergreifen, um etwaige Bedrohungen im Vorfeld abwenden zu können.

In einer weiteren Ausführungsform wird die Aufgabe gelöst durch eine Vorrichtung, welche derart eingerichtet ist, dass ein zuvor beschriebenes Verfahren durchführbar ist.

Im Weiteren wird die Erfindung anhand von Ausführungsbeispielen näher erläutert. Es zeigt:

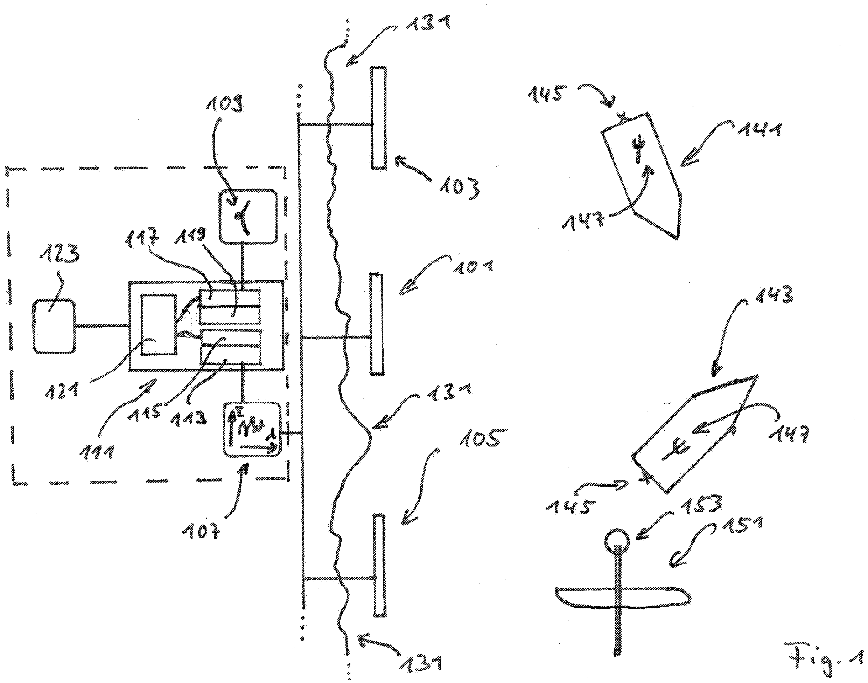

- Figur 1: eine stark schematische Darstellung eines Überwachungssystems, welches an einer Küste angeordnet ist mit zwei überwachten Schiffen.

Ein Küstenüberwachungssystem umfasst drei Hydrophone 101, 103, 105, welche entlang einer Küstenlinie 131 unterhalb der Wasseroberfläche fest im Erdboden verankert sind. Die längste Ausdehnung der Hydrophone 101, 103, 105 ist entlang der Küstenlinie beträgt ca. 450 Meter. Jedes der Hydrophone 101, 103, 105 weist piezo-elektrischen Keramiken auf, welche ein Unterwasserschallsignal in Spannungen umwandelt, welche durch eine Elektronik (nicht dargestellt) aufbereitet werden.

Sämtlichen Hydrophonen 101, 103, 105 ist eine Auswerteeinheit 107 zugeordnet, die an den Hydrophonen 101, 103, 105 anliegenden Unterwasserschallsignalen in Intensität und Wellenlänge aufbereitet. Die Funktion von Intensität und Wellenlänge (I(λ)) können in einem Speicher 113 eines Rechners abgelegt werden.

Der Rechner weist zusätzlich einen Speicher 115 auf, in welchem Schiffsinformation abgelegt sind. Zusätzlich weist das Überwachungssystem eine Funkantenne 109 auf, welche ausgesandte AIS-Signale auffangen kann. Diese AIS-Signale werden ausgewertet und die Sendespeicherinformationen im Speicher 117 und die zugehörige Schiffsinformation in dem Speicher 119 abgelegt.

Der Datenbankrechner 111 weist eine Vergleichseinheit 121 auf. Diese Vergleichseinheit 121 vergleicht die Referenz-Schiffsinformation, welche im Sendeschiffspeicher 119 abgelegt ist, mit dem Signaturschiffspeicher 115, welcher eine gemessene Schiffssignatur aufweist.

Zusätzlich weist der Rechner einen Bildschirm 123 auf, in welchem die Informationen der Speicher 113, 115, 117, 119 und die Vergleichsinformation 121 dargestellt werden.

Vorliegend sollen zwei Schiffe 141, 143 entlang eines Kurses auf der Wasseroberfläche fahren. Jedes der Schiffe 141, 143 weist eine rotierende Schiffsschraube 145 auf. Zusätzlich weisen die Schiffe 141, 143 jeweils einen AIS-Sender auf, welcher AIS-Informationen insbesondere an den Funkempfänger 109 sendet. Zusätzlich kann das Überwachungssystem mit einer Flugdrohne 151 verbunden sein, wobei die Flugdrohne ein Kamerasystem 153 aufweist.

Vorliegend sendet das Schiff 141 sein korrektes AIS-Signal aus. Dieses AIS-Signal wird von dem AIS-Sender 147 ausgesandt. Diese Funksignale werden von dem Funkempfänger 109 aufgefangen und die entsprechenden Informationen extrahiert. Diese Informationen werden in den Speicher 117, 119 hineingeschrieben.

Anschließend wird in dem Datenbankrechner 111 abgefragt, ob zudem ermitteltem Schiff 141 bereits eine Unterwasserschallinformation als Referenz vorliegt.

Zusätzlich wird von den Hydrophonen 101, 103, 105 das Unterwasserschallsignal des Schiffs 141, welches von der Schiffsschraube 145 ausgesandt wird, aufgezeichnet, sodass eine Mess-Unterwasserschallsignatur des Schiffs 141 vorliegt. Das Bestimmen des Schiffssignatur erfolgt mittels der Auswerteeinheit 107. Diese Schiffsignatur (Messwert) wird mit sämtlichen in der Datenbank hinterlegten Schiffssignaturen (Referenzwerte) durch Autokorrelation verglichen.

Da vorliegend der Autokorrelationsgrad oberhalb von 0,9 liegt, wird das Schiff identifiziert.

Dadurch, dass die Hydrophone 101, 103, 105 einen Abstand von ca. 10 Kilometer aufweisen, kann zu jedem Zeitpunkt der Ort des Schiffs 141 über die Zeit und somit der Kurs des Schiffes 141 bestimmt werden. Sobald das Schiff 141 hinter dem Horizont verschwunden ist, sendet es dennoch weiterhin Unterwasserschallsignale aus, welche ein Lokalisieren und ein Bestimmen der Schiffsroute ermöglichen.

Das Schiff 143 sei bisher dem Küstenüberwachungssystem noch nicht bekannt. Das Schiff 143 sendet über seine AIS-Antenne 147 ein Funksignal an den Funkempfänger 109, welcher die ausgesandten Informationen auswertet. Gleichzeitig werden die Positionsinformationen, welche übermittelt wurden und welche mittels der Hydrophone 101, 103, 105 bestimmt und verglichen wurden zu dem dann gefundenen Schiff 143 mit der durch die Hydrophone gemessenen Schallsignatur durch Ablegen in den Speichern verknüpft.

Das Schiff wird weiterhin bei seinem Kurs auch hinter den Horizont hinweg verfolgt. Nachdem es die Reichweite des Überwachungssystems verlassen hat, soll es vorliegend wieder in den Überwachungsbereich des Überwachungssystems hinein fahren, wobei es diesmal von Terroristen gekapert ist, welche das AIS derart manipuliert haben, dass eine gefälschte AIS-Signatur ausgesandt wird.

Wiederrum werden die AIS-Sendeinformationen über die Antenne 109 empfangen und die durch die Schiffsschraube 145 ausgesandten Schallsignaturen mittels der Hydrophone 101, 103, 105 ermittelt.

Diese Schallinformationen werden mit sämtlichen bekannten Schallinformationen autokorreliert und erkannt, dass es sich um ein anderes Schiff handeln müsste, als es sich gemäß der AIS-Sendeinformationen auszeichnet.

Daraufhin wird eine Flugdrohne 151 gestartet, welche den Kurs des Schiffs 143 abfliegt. Dabei weist die Flugdrohne 151 ein Kamerasystem auf, welches die automatischen Bilder des Schiffs 143 aufzeichnet. Diese Kamera-Informationen werden wiederrum mittels Funk an die Funkempfänger übermittelt. Dabei kann eine automatische Software bereits den Schiffstyp erkennen oder aufgezeichnete Schriftzüge an den Bordwänden des Schiffes mittels OCR ermitteln.

Sollten die Informationen immer noch nicht zur Aufklärung dienen können, wird die Küstenwache oder das Militär verständigt, um das Schiff durch Personenkontrolle zu überprüfen.

## Patentansprüche

1. Überwachungssystem zum Überwachen eines Wasserfahrzeugs (141) oder mehrerer Wasserfahrzeuge (141, 143), mit einer Identifikationsvorrichtung und einem ersten Hydrophon (101), welches ortsfest angeordnet ist und derart eingerichtet ist, dass von einem der Wasserfahrzeuge (141, 143) ausgesandte Schallsignale als Mess-Unterwasserschallinformation bestimmt werden, wobei die Identifikationsvorrichtung einen ersten Speicher (115) für die Mess-Unterwasserschallinformation und einen zweiten Speicher (117, 119) für eine gemessene und/oder abgelegte Wasserfahrzeuginformation aufweist, wobei die gemessene und/oder abgelegte Wasserfahrzeuginformation frei von einer unterwasserschallbasierten Wasserfahrzeuginformation ist, wobei der erste Speicher und der zweite Speicher miteinander verknüpft sind, um basierend auf der Verknüpfung des ersten Speichers mit dem zweiten Speicher eine eindeutige Zuordnung der Mess-Unterwasserschallinformation zu der gemessenen und/oder abgelegten Wasserfahrzeuginformation zu erhalten, wobei das Überwachungssystem eine Klassifikationsvorrichtung aufweist, die ausgebildet ist, die Wasserfahrzeuginformation des Wasserfahrzeugs zu ermitteln, wobei das Überwachungssystem ausgebildet ist, eine der Wasserfahrzeuginformation zugeordnete Referenz-Unterwasserschallinformation mit der Mess-Unterwasserschallinformation abzugleichen um eine Gefahrenlage zu erkennen.

2. Überwachungssystem nach Anspruch 1, **gekennzeichnet durch** ein zweites Hydrophon (103), welches in einem Mikrofonabstand zum ersten Hydrophon ortsfest angeordnet ist.

3. Überwachungssystem nach einem der vorherigen Ansprüche, **gekennzeichnet durch** ein drittes Hydrophon (105) und/oder viertes Hydrophon und/oder durch weitere Hydrophone, welche jeweils untereinander oder zum ersten Hydrophon oder zum zweiten Hydrophon in einem Hydrophonabstand ortsfest angeordnet sind.

4. Überwachungssystem nach Anspruch 3, **dadurch gekennzeichnet, dass** die jeweiligen Hydrophonabstände unterschiedliche Werte aufweisen.

5. Überwachungssystem nach einem der Ansprüche 2 bis 4, **dadurch gekennzeichnet, dass** ein Wert des Hydrophonabstandes zwischen 100m und 100km, insbesondere zwischen 500m und 50km oder zwischen 1km und 20km, liegt.

6. Überwachungssystem nach einem der vorherigen Ansprüche, **gekennzeichnet durch** eine Klassifikationsvorrichtung (109, 117, 119), welche die Wasserfahrzeuginformation eines der Wasserfahrzeuge ermittelt.

7. Überwachungssystem nach Anspruch 6, **dadurch gekennzeichnet, dass** die Klassifikationsvorrichtung derart eingerichtet ist, dass optische Informationen und/oder Funkinformationen zum Ermitteln der Wasserfahrzeuginformation verwendet werden.

8. Überwachungssystem nach einem der Ansprüche 6 oder 7, **dadurch gekennzeichnet, dass** die Klassifikationsvorrichtung oder Teile der Klassifikationsvorrichtung in einem unbemannten Fahrzeug (151), insbesondere in einer Drohne, in einem Satellit, in einem autonomen Wasserfahrzeug oder in einem autonomen Unterwasserfahrzeug, angeordnet ist.

9. Verfahren zum Verifizieren einer transmittierten Wasserfahrzeuginformation eines Wasserfahrzeugs, insbesondere eines AIS-Signals, wobei das Verfahren folgende Schritte aufweist:
- Ermitteln der transmittierten Wasserfahrzeuginformation des Wasserfahrzeugs, wobei die transmittierte Wasserfahrzeuginformation frei von einer unterwasserschallbasierten Wasserfahrzeuginformation ist, und Identifizieren des Wasserfahrzeugs,
- Ermitteln einer Mess-Unterwasserschallinformation des Wasserfahrzeugs,
- Vergleichen der Mess-Unterwasserschallinformation mit einer Referenz-Unterwasserschallinformation des identifizierten Wasserfahrzeugs und
- Anzeigen einer Abweichinformation, falls die Mess-Unterwasserschallinformation von der Referenz-Unterwasserschallinformation abweicht.

## Claims

1. Monitoring system for monitoring a watercraft (141) or a number of watercrafts (141, 143), having an identification apparatus and a first hydrophone (101), which is arranged in a fixed position and is designed such that sound signals emitted from one of the watercrafts (141, 143) are determined as measured underwater-sound information, wherein the identification apparatus has a first memory (115) for the measured underwater-sound information and a second memory (117, 119) for a watercraft information which has been measured and/or stored, wherein the watercraft information which has been measured and/or stored is free of an underwater-sound-based watercraft information, wherein the first memory and the second memory are linked to one another in order, on the basis of the first memory being linked to the second memory, to achieve clear assignment of the measured underwater-sound information to the watercraft information which has been measured and/or stored, wherein the monitoring system has a classification apparatus which is designed to ascertain the watercraft information of the watercraft, wherein the monitoring system is designed so that a reference underwater-sound information assigned to the watercraft information is compared with the measured underwater-sound information, in order for a high-risk situation to be identified.

2. Monitoring system according to Claim 1, **characterized by** a second hydrophone (103), which is arranged in a fixed position at a microphone distance from the first hydrophone.

3. Monitoring system according to either of the preceding claims, **characterized by** a third hydrophone (105) and/or a fourth hydrophone and/or by further hydrophones, which are arranged in a fixed position at a hydrophone distance in each case from one another or from the first hydrophone or from the second hydrophone.

4. Monitoring system according to Claim 3, **characterized in that** the respective hydrophone distances have different values.

5. Monitoring system according to one of Claims 2 to 4, **characterized in that** a value of the hydrophone distance is between 100 m and 100 km, in particular between 500 m and 50 km or between 1 km and 20 km.

6. Monitoring system according to one of the preceding claims, **characterized by** a classification apparatus (109, 117, 119) which ascertains the watercraft information of one of the watercrafts.

7. Monitoring system according to Claim 6, **characterized in that** the classification apparatus is designed such that use is made of optical information and/or radio information for ascertaining the watercraft information.

8. Monitoring system according to either of Claims 6 and 7, **characterized in that** the classification apparatus or parts of the classification apparatus is or are arranged in an unmanned vehicle (151), in particular in a drone, in a satellite, in an autonomous watercraft or in an autonomous underwater vehicle.

9. Method for verifying a watercraft information, in particular an AIS signal, which has been transmitted from a watercraft, wherein the method has the following steps:
- ascertaining the watercraft information transmitted from watercraft, wherein the watercraft information transmitted is free of any underwater-sound-based watercraft information, and identifying the watercraft,
- ascertaining a measured underwater-sound information of the watercraft,
- comparing the measured underwater-sound information with a reference underwater-sound information of the identified watercraft, and
- indicating a deviation information in the event of the measured underwater-sound information deviating from the reference underwater-sound information.

## Revendications

1. Système de surveillance destiné à surveiller un navire (141) ou plusieurs navires (141, 143), comprenant un dispositif d'identification et un premier hydrophone (101) qui est disposé en position fixe et est conçu de telle sorte que des signaux sonores émis par l'un des navires (141, 143) soient déterminés en tant qu'information sonore sous-marine de mesure, dans lequel le dispositif d'identification comporte une première mémoire (115) pour l'information sonore sous-marine de mesure et une deuxième mémoire (117, 119) pour une information de navire mesurée et/ou enregistrée, dans lequel l'information de navire mesurée et/ou enregistrée est exempte d'information de navire à base de sons sous-marins, dans lequel la première mémoire et la deuxième mémoire sont connectées entre elles afin d'obtenir, sur la base de la connexion de la première mémoire à la deuxième mémoire, une association non ambiguë entre l'information sonore sous-marine de mesure et l'information de navire mesurée et/ou enregistrée, le système de surveillance comportant un dispositif de classification conçu pour déterminer l'information de navire du navire, le système de surveillance étant conçu pour comparer une information sonore sous-marine de référence associée à l'information de navire avec l'information sonore sous-marine de mesure afin de détecter une situation de danger.

2. Système de surveillance selon la revendication 1, **caractérisé par** un deuxième hydrophone (103) qui est disposé de manière fixe avec un espacement de microphone par rapport au premier hydrophone.

3. Système de surveillance selon l'une des revendications précédentes, **caractérisé par** un troisième hydrophone (105) et/ou un quatrième hydrophone et/ou par d'autres hydrophones, qui sont respectivement disposés en position fixe avec un espacement d'hydrophone les uns par rapport aux autres ou par rapport au premier hydrophone ou au deuxième hydrophone.

4. Système de surveillance selon la revendication 3, **caractérisé en ce que** les espacements respectifs des hydrophones présentent des valeurs différentes.

5. Système de surveillance selon l'une des revendications 2 à 4, **caractérisé en ce qu'**une valeur de l'espacement des hydrophones est comprise entre 100m et 100km, en particulier entre 500m et 50km ou entre 1km et 20km.

6. Système de surveillance selon l'une des revendications précédentes, **caractérisé par** un dispositif de classification (109, 117, 119) qui détermine l'information de navire de l'un des navires.

7. Système de surveillance selon la revendication 6, **caractérisé en ce que** le dispositif de classification est conçu de telle sorte que des informations optiques et/ou des informations radio soient utilisées pour déterminer l'information de navire.

8. Système de surveillance selon l'une des revendications 6 et 7, **caractérisé en ce que** le dispositif de classification ou des parties du dispositif de classification sont disposés dans un véhicule sans équipage (151), en particulier dans un drone, dans un satellite, dans un navire autonome ou dans un navire sous-marin autonome.

9. Procédé de vérification d'une information de navire transmise d'un navire, en particulier d'un signal AIS, le procédé comportant les étapes suivantes :
- déterminer l'information de navire transmise du navire, dans lequel l'information de navire transmise est exempte d'information de navire à base de sons sous-marins, et identifier le navire,
- déterminer une information sonore sous-marine de mesure du navire,
- comparer l'information sonore sous-marine de mesure à une information sonore sous-marine de référence du navire identifié et
- afficher une information d'écart si l'information sonore sous-marine de mesure s'écarte de l'information sonore sous-marine de référence.
